# FASCICULE DE BREVET EUROPEEN

(11) **EP 0 838 705 B1**
(45) Date de publication et mention de la délivrance du brevet: **02.05.2007**
(21) Numéro de dépôt: 97402472.1
(22) Date de dépôt: 20.10.1997
(51) Int. Cl.: G02B 6/44

(54) **Faisceau de fibres optiques à structure ordonnée**
Faseroptisches Bundel mit geordneter Struktur
Fibre-optic bundle with arranged structure

(30) Priorité: 24.10.1996 FR 9612980
(43) Date de publication de la demande: 29.04.1998
(73) Titulaire: Draka Comteq B.V., 1021 JZ Amsterdam (NL)
(72) Inventeur: Benzel, David, 62100 Calais (FR)
(74) Mandataire: Blokland, Arie

(56) Documents cités:
- EP-A- 0 122 169
- DE-A- 3 526 823
- DE-A- 4 040 715
- DE-C- 4 101 082
- GB-A- 2 271 859

## Description

L'invention concerne les câbles de fibres optiques et plus particulièrement un faisceau de fibres optiques pour la fabrication de tels câbles dans lequel les fibres optiques sont assemblées sous une forme ordonnée.

Pour la fabrication d'un câble, il est souhaitable, qu'après insertion du faisceau de fibres dans la gaine du câble, les fibres optiques du faisceau puissent être identifiées sélectivement aux extrémités du câble. Par ailleurs, il est souhaitable d'éviter que des contraintes de pression trop importantes, dues aux caractéristiques de l'assemblage, s'exercent sur les fibres optiques car ces contraintes sont la cause d'un phénomène d'augmentation de l'atténuation dans les fibres optiques.

Selon une solution connue de l'art antérieur, le faisceau de fibres optiques est torsadé pour maintenir en place les fibres optiques au moment de la mise sous gaine. Cette technique induit cependant des contraintes de pression sur les fibres ce qui est indésirable.

Le document de brevet allemand DE-35 26 823 divulgue un faisceau de fibres optiques à structure ordonnée dans lequel des rubans de fibres optiques sont disposés en pile les uns sur les autres, les rubans étant liés entre eux par leurs faces de dessus et de dessous pour éviter un déplacement relatif entre les rubans pendant la mise sous gaine du faisceau.

Dans le document de brevet allemand DE-41 01 082, les rubans sont disposés en pile en étant insérés dans des sortes de fentes d'une structure préfabriquée qui permet le maintien en place des rubans pendant la phase de mise sous gaine.

Le but de l'invention est de proposer une autre configuration d'assemblage pour lier les rubans sans engendrer de contraintes sur les fibres optiques et qui préserve l'ordre des fibres dans le faisceau pour permettre une identification aisée des fibres quand le faisceau est mis sous gaine.

A cet effet, l'invention a pour objet un faisceau de fibres optiques assemblées sous une forme ordonnée comprenant une pluralités de rubans de fibres optiques disposés les uns sur les autres pour constituer une pile présentant un côté formé par un bord de chaque ruban, ce côté s'étendant sensiblement transversalement auxdits rubans, caractérisé par un élément adhésif disposé sur ledit côté de la pile et adhérant audit bord latéral de chaque ruban pour lier ces rubans.

Un tel élément adhésif permet de conserver la structure ordonnée du faisceau pendant sa mise sous gaine. Il ne crée pas de contraintes de pression sur les fibres optiques. Il permet en outre d'assembler un grand nombre de fibres optiques pour une section réduite de gaine.

L'invention est décrite plus en détails ci-après en référence aux dessins.

La figure 1 montre en coupe transversale, un faisceau de fibres optiques selon l'invention.

La figure 2 illustre un procédé de fabrication d'un faisceau de fibres optiques selon l'invention.

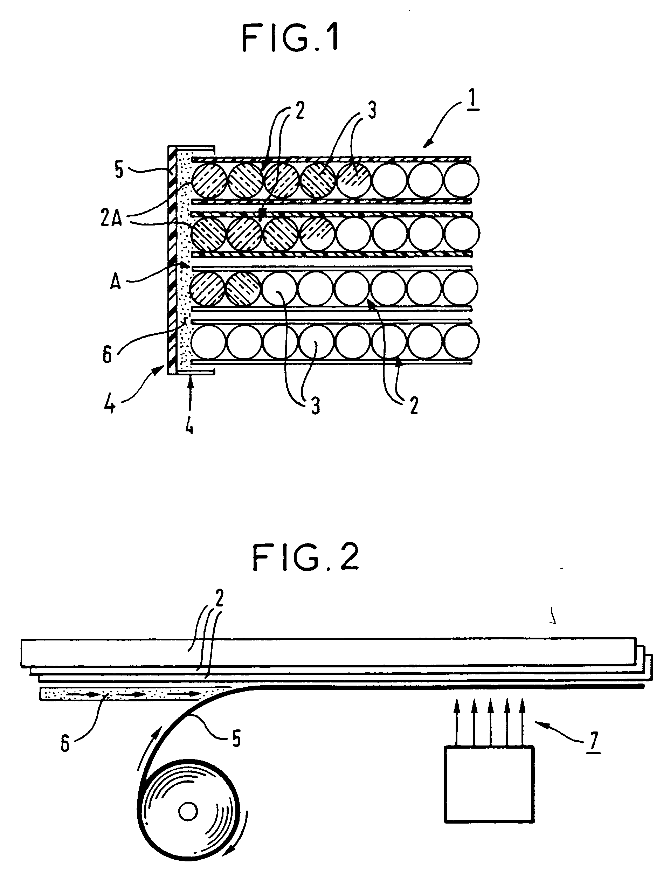

Figure 1, le faisceau de fibres optiques 1 comprend une pluralité de rubans de fibres optiques, dans l'exemple 4 rubans 2 disposés les uns sur les autres pour constituer une pile de rubans montrée ici en coupe transversale.

On voit que chaque ruban comprend un ensemble de fibres optiques 3 qui sont disposées parallèlement les unes aux autres. Chaque fibre 3 est enrobée d'un matériau qui l'isole des fibres voisines et qui maintient les fibres d'un ruban suivant une configuration sensiblement plane. Dans l'exemple de la figure 1, les fibres d'un ruban sont laminées dans la matrice du ruban entre deux films en un matériau isolant ou encapsulées.

Comme visible sur cette figure, la pile de rubans 2 présente un côté A formé par un bord latéral 2A de chaque ruban. Ce côté A s'étend sensiblement transversalement aux rubans 2 (perpendiculairement ou suivant une direction oblique) et un élément adhésif 4 est placé sur ce côté de la pile pour adhérer au bord 2A de chaque ruban de sorte à lier les rubans entre eux.

De cette façon, chaque ruban est maintenu en place dans la structure du faisceau au moment où le faisceau doit être mis sous gaine pour la fabrication d'un câble.

On remarquera qu'un ruban peut être enlevé du faisceau de fibres optiques sans nuire à la cohésion de la structure du faisceau.

L'élément adhésif 4 peut être constitué par un simple film adhésif ou par une bande 5 en matière synthétique enduite d'une résine 6 qui peut être durcie sous l'effet de rayons UV (Ultra Violets).

Figure 2, on a représenté de façon très schématique un procédé pour assembler simplement des rubans à l'aide d'une bande 5 enduite d'une résine qui durcit sous l'effet de rayons UV.

Les rubans 2 de fibres optiques sont disposés face contre face sur chant au dessus de la bande 5. La bande 5 peut être enduite de résine 6 en même temps qu'elle est déroulée sous les rubans 2. Quand les rubans 2 sont couchés sur chant sur la face de la bande 5 enduite de résine, la résine 6 est durcie par les rayons UV 7 pour lier les rubans.

Ainsi, chaque ruban est bien positionné dans un câble et conserve sa position dans le câble lors des opérations de câblage sans destruction de la matrice constituée ce qui n'est pas le cas si les rubans ne sont pas liés les uns aux autres.

## Revendications

1. Un faisceau de fibres optiques assemblées sous une forme ordonnée comprenant une pluralités de rubans (2) de fibres optiques s'étendant dans une direction donnée et disposés les uns sur les autres pour constituer une pile présentant un côté (A) formé par l'ensemble des bords latéraux (2A) des rubans, ce côté s'étendant sensiblement transversalement auxdits rubans, **caractérisé par** un élément adhésif (4) disposé uniquement sur ledit côté (A) de la pile et adhérant audit ensemble des bords latéraux (2A) des rubans pour lier ces rubans.

2. Le faisceau selon la revendication 1, dans lequel l'élément adhésif (4) est constitué par une bande (5) enduite de matière adhésive (6).

3. Le faisceau selon la revendication 2, dans lequel la matière adhésive est une résine apte à être durcie par rayons UV.

4. Câble fabriqué à partir d'un faisceau de fibres optiques selon l'une des revendications 1 à 3.

## Claims

1. A bundle of optical fibres assembled in an ordered form, comprising a plurality of ribbons (2) of optical fibres extending in a given direction and arranged on top of one another to form a stack having a side (A) formed by the totality of lateral edges (2A) of the ribbons, that side extending in a substantially transverse direction to said ribbons, **characterised by** an adhesive element (4) arranged solely on said side (A) of the stack and adhering to said totality of lateral edges (2A) of the ribbons so as to connect those ribbons.

2. The bundle according to claim 1, wherein the adhesive element (4) is composed of a strip (5) coated with adhesive material (6).

3. The bundle according to claim 2, wherein the adhesive material is a resin hardenable by UV rays.

4. Cable produced from a bundle of optical fibres according to one of claims 1 to 3.

## Patentansprüche

1. Bündel von Lichtleitfasern, die in geordneter Form zusammengefasst sind, mit mehreren Streifen (2) von Lichtleitfasern, die sich in einer gegebenen Richtung erstrecken und übereinander angeordnet sind, um einen Stapel zu bilden, der eine Seite (A) aufweist, die von der Gesamtheit der Seitenränder (2A) der Streifen gebildet wird, wobei diese Seite sich im Wesentlichen quer zu den Streifen erstreckt, **gekennzeichnet durch** ein klebendes Element (4), das nur auf der Seite (A) des Stapels angeordnet ist und an der Gesamtheit der Seitenränder (2A) der Streifen klebt, um diese Streifen zu verbinden.

2. Bündel nach Anspruch 1, bei dem das klebende Element (4) aus einem Band (5) besteht, das mit Klebematerial (6) bestrichen ist.

3. Bündel nach Anspruch 2, bei dem das Klebematerial ein Harz ist, das durch UV-Strahlen gehärtet werden kann.

4. Kabel, das ausgehend von einem Lichtleitfaserbündel nach einem der Ansprüche 1 bis 3 hergestellt ist.
